Europäisches Patentamt

European Patent Office

Office européen des brevets

(19)

(11) **EP 1 351 476 A1**

(12) **EUROPEAN PATENT APPLICATION**

(43) Date of publication:
08.10.2003 Bulletin 2003/41

(51) Int Cl.⁷: **H04M 3/42**, H04M 1/57

(21) Application number: 02090134.4

(22) Date of filing: 05.04.2002

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Elmeg GmbH & Co. KG
31228 Peine (DE)**

(72) Inventor: **Gernot, Janas
24214 Gettdorf (DE)**

(74) Representative: **Eisenführ, Speiser & Partner
Anna-Louisa-Karsch-Strasse 2
10178 Berlin (DE)**

(54) **Bidirectional data transmission during off-hook condition**

(57)   In the method for accessing functions of a private access branch exchange equipment (also referred to just as private access branch exchange or PABX) through a system telephone, signals are transmitted from the private access branch exchange equipment to the system telephone as FSK signals and from the system telephone to the private access branch exchange equipment as dual tone multi frequency (DTMF) signals. The private access branch exchange equipment uses FSK signals to transmit commands to the system telephone while the system telephone uses DTMF signals to transmit user actions related to commands or data of the private access branch exchange equipment to the private access branch exchange.

The inventive method provides the possibility, to access menu driven functions of a private access branch exchange equipment through an analogue system telephone, which is connected to the private access branch exchange equipment by a standard two-wire connection. As two-wire connections run star-like, i.e. each system telephone is provided with a connection on its own, a fail-function in one of the connections does not affect the other system telephones. Further, analogue system telephones and two-wire connections are cheaper than digital system telephones and four-wire connections.

Fig. 4

EP 1 351 476 A1

**Description**

The invention relates to a method for bi-directional off hook data transmission between a private access branch exchange equipment and a system telephone, to a system telephone, and to a private access branch exchange equipment.

Private access branch exchange (PABX) is used to connect a number of digital or analogue system telephones to a digital telephone line of a public switched telephone network (PSTN). Private access branch exchange equipments provide at least analogue internal lines to connect analogue system telephones. The lines for connecting analogue system telephones are standard two-wire lines providing a closed electrical circuit, through which speech and data are transmitted. Data to be transmitted through the standard two-wire lines to the analogue system telephones may be, for example, the telephone number associated with an ingoing telephone call. The number is received as caller ID by the private access branch exchange equipment and is further transmitted to the analogue system telephone as a caller line identification presentation (CLIP) message.

As only one closed electrical circuit is present, data and speech need to be transmitted trough the same electrical circuit from the private access branch exchange equipment to the analogue telephone.

In order to prevent data corruption by speech signals during data transmission, the ETS 300 659-2 protocol, a subscriber line protocol over the local loop for display (and related services), is used. According to this protocol, in the off-hook data transmission the private access branch exchange sends a TE (telephone equipment) alerting signal (TAS) to the telephone and waits for an TE acknowledgement signal (TE-ACK) from the telephone before it sends the data, like the telephone number associated with an ingoing telephone call. If the private access branch exchange does not receive the TE-ACK signal within a time-out, it does not send any data. If, on the other hand, the private access branch exchange receives a valid TE-ACK signal within the time-out, data in form of an FSK signal (frequency shift keying) is sent to the analogue system telephone.

In addition to analogue internal lines, some private access branch exchange equipments also provide internal digital lines for connecting digital system telephones.

Usually, a private access branch exchange equipment provides a number of menu driven functions like phone book, setup procedures, call management etc. While those menu driven functions are accessible from digital system telephones, it is not possible to access menu driven services from analogue system telephones, which are connected to the private access branch exchange equipment by two-wire connections.

It is therefore an object of the present invention to provide access to the menu driven functions of a private access branch exchange equipment through analogue system telephones, which are connected to the private access branch exchange equipment by two-wire connections.

This object is achieved by a method for bi-directional off hook data transmission between a private access branch exchange equipment and a system telephone as defined in claim 1, a system telephone as defined in claim 8, and a private access branch exchange equipment as defined in claim 12.

In the method for accessing functions of a private access branch exchange equipment (also referred to just as private access branch exchange or PABX) through a system telephone, signals are transmitted from the private access branch exchange equipment to the system telephone as FSK signals and from the system telephone to the private access branch exchange equipment as dual tone multi frequency (DTMF) signals. The private access branch exchange equipment uses FSK signals to transmit commands to the system telephone while the system telephone uses DTMF signals to transmit user actions related to commands or data of the private access branch exchange equipment to the private access branch exchange.

The inventive method provides the possibility, to access menu driven functions of a private access branch exchange equipment through an analogue system telephone, which is connected to the private access branch exchange equipment by a standard two-wire connection. As two-wire connections run star-like, i.e. each system telephone is provided with a connection on its own, a fail-function in one of the connections does not affect the other system telephones. Further, analogue system telephones and two-wire connections are cheaper than digital system telephones and four-wire connections.

The inventive method may be seen as some sort of remote control of units of the system telephone by the PABX by sending FSK commands.

In a further development of the method, the private access branch exchange answers to a DTMF signal of the system telephone directly with an FSK signal. By discarding further signals, like alerting and acknowledgement signals, the speed of transmission can be increased, so that the delay of a response to a user action can be kept small.

In a still further development of the method, the system telephone goes on hook if a DTMF signal is not answered by the private access branch exchange equipment with an FSK signal within a predetermined time out. This prevents the system telephone from staying in a mode waiting for a FSK signal to arrive, in which mode the keypad of the system telephone may be blocked.

The time out is advantageously at least one order of magnitude longer than the usual time between the reception of the DTMF signal by the private access branch exchange equipment and the sending of the FSK signal. This helps to prevent premature on hook status of the system telephone if a delay of transmission occurs in the line connecting the system telephone and the private access branch exchange. The time out may be chosen longer if the probability for transmission delays to occur is high and may be chosen shorter if the probability for transmission delays to occur is low.

Further, the inventive method may be implemented such that several commands can be transmitted within one message by using only one message type and different parameter types for distinguishing between different commands in one message. With transmitting several commands in one message, a chain of commands can be transmitted using only one message, what reduces the time necessary for transmitting the chain of commands.

In a further development of the invention, the message comprises less than 80 mark bits, in particular 40 mark bits. By reducing the number of mark bits of a message, the transmission speed can be increased compared to using the full number of mark bits.

According to another aspect of the invention, a system telephone for connecting to the private access branch exchange equipment by a two-wire connection is provided. A system telephone according to the invention may also be an analogue base station for a wireless system telephone, which is connected to the private access branch exchange by a two-wire line, together with the wireless system telephone. The system telephone comprises an input unit, e.g. a keypad, an communication unit being able to send DTMF signals to the private access branch exchange equipment and receiving FSK signals from the private access branch exchange equipment, and a communication control unit. In case of a wireless system telephone, the display and the input unit are preferably part of the wireless system telephone, whereas the communication unit and the communication control unit are part of the analogue base station. However, the communication control unit may also be integrated into the wireless system telephone. The communication control unit is designed such that it provides a system mode in which FSK signals received from the private access branch exchange equipment are recognized as commands and in which an action of the input unit, e.g. a keystroke of a keypad, related to commands of the private access branch exchange equipment are transmitted to the private access branch exchange equipment as DTMF signals.

Such an inventive system telephone provides access, in particular interactive access, to functions of a private access branch exchange equipment through a standard two-wire line.

In a further development of the system telephone, the communication control unit is designed such that it detects an FSK signal without a leading TE alerting signal in off hook state. This allows for discarding further signals, like alerting and acknowledgement signals. As a consequence, the speed of transmission through the two-wire line can be increased. As a consequence, the delay between user actions and the response from the PABX can be kept small.

In a still further development, the communication unit of the system telephone is designed such that, after sending a DTMF signal, an action of the input unit, in particular a keystroke, is only accepted after an FSK signal from the private access branch exchange equipment has been received. This helps to prevent from sending further DTMF signals while the private access branch exchange sends a FSK signal. Sending two signals at the same time through a two-wire line may corrupt both signals. The blocking of the keypad after sending an DTMF signal to the private access branch exchange equipment until the FSK signal is received helps in particular preventing signal corruption when no alerting and acknowledgement signals are used to control the transmission.

In a still further development, the communication control unit is designed such that a special action of the input unit is defined for initiating the system mode. If this action is performed and a corresponding command from the private access branch exchange equipment is received by the communication control unit within a preset time the system mode is entered. This prevents the system telephone from entering the system mode when it is not connected to a private access branch exchange equipment. Thus, using the system telephone as a "usual" telephone is facilitated.

In a further aspect of the invention, a private access branch exchange equipment for connecting to a system telephone by a two-wire connection is provided, which comprises a function control unit, which is designed such that it provides a mode in which it relates DTMF signals from the system telephone representing user actions related to a function of the private access branch exchange equipment to the respective function, and in which it is possible to send commands to the system telephone as FSK signals.

With such a private access branch exchange equipment it is possible to access functions of the private access branch exchange equipment from an analogue system telephone through a two-wire connection.

Further advantages and features of the present invention will become clear from the following detailed description of an embodiment of the invention together with the accompanying drawings, in which

Fig. 1 shows a schematic diagram of a system telephone according to the invention,

Fig. 2 shows a schematic diagram of a message sent from the private access branch exchange to the system telephone,

Fig. 3 shows the timing scheme according to the ETS 300 659-2 standard,

Fig. 4 shows an optimised timing scheme according to the invention,

Figs. 5a and 5b show a flow chart of the system telephone function, and

Figs. 6a - 6d show the character coding used for displaying characters on the display of the system telephone.

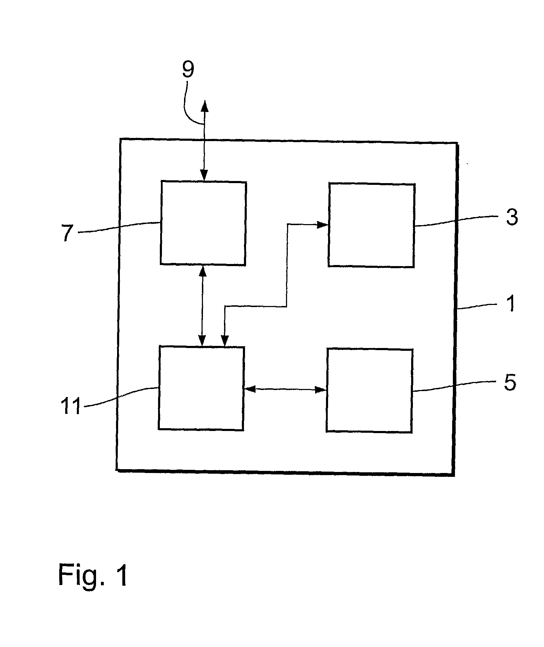

Fig. 1 shows schematically an analogue system telephone 1 comprising a display 3, an input unit 5, a communication unit 7 for exchanging data with a private access branch exchange (PABX) (not shown) by a two-wire connection 9, and a communication control unit 11 which is connected to the display unit 3, the input unit 5 and the communication unit 7.

The communication control unit 11 controls the communication with the PBAX when the telephone is in the so-called system mode (to be described later). In addition, in the present embodiment, the communication control unit 11 also controls entering and leaving the system mode. However, it is also possible, to let the control unit 11 only control the communication in the system mode and to let entering and leaving the system mode be controlled by an other control unit, e.g. a control unit for controlling the local functions, i.e. the functions not related to the system mode, of the system telephone.

In the present embodiment, the communication control unit 11 is implemented as a separate unit. It may, however, be integrated into the communication unit 7. The communication control unit 11 may as well be integrated into a more general control unit of the system telephone which also comprises control functions for controlling local functions like, for example, the redial memory or internal set up procedures.

The display unit 3 serves as a display for displaying the status of the system telephone, numbers from the redial memory, set up information and the like. In addition, the display serves for displaying data sent from the PBAX, especially in the system mode.

The input unit 5 of the present embodiment of the inventive system telephone comprises a numerical keypad the keys of which represent the standard characters 0 - 9, star (*) and hash (#) as defined by their DTMF signals. Further, the keypad comprises menu keys like a "menu key" itself, an "OK key" and the like, which, in the present embodiment, are related to information/data shown on the display.

Pressing the menu key for a certain extended time, which is in the present embodiment 300 ms, or longer causes the communication control unit 11 to bring the system telephone 1 into the system mode, which is used for bidirectional data transmission between the system telephone 1 and the PABX, and to transmit a two digit DTMF signal "A,x" to the PABX. The length of the time the menu key is at least to be pressed to enter the system mode may be chosen longer or shorter than 300 ms, however, 300 ms have been shown to be reasonable time. After transmission of the two digit DTMF signal "A,x" the system telephone 1 waits for a certain time, which is in the present embodiment 400 ms, in which it expects to receive the "Goto_system_mode" command from the PABX. If this "Goto_system_mode" command is not received within 400ms the system telephone will fall back into normal mode and so act like a "normal" telephone when connected to a "normal" telephone line even if the menu key has been pressed for an extended time.

In the system mode, the communication control unit 11 causes the communication unit 7 to transmit DTMF signals to the PBAX as the user presses a key of the keypad. While this is also true for the keys 0 to 9, star and hash in the "normal mode" of the system telephone, i.e. the mode in which the inventive system telephone acts as a usual telephone, no DTMF signal is usually sent in the normal mode if any of the menu keys like "menu", "C", "OK" etc., which are related to the display, are pressed. In other words, in the system mode, the communication control unit 11 relates DTMF signals to the menu keys.

Table 1 shows the functions of the keys of the keypad of the system telephone together with the DTMF-signals related to each key when the system telephone is in the system mode.

In the system mode, the keys of the input unit may represent other functions as those shown in table 1, if it is suitable for the service provided for the user of the system telephone by the PABX.

Table 1

| Key | Function | DTMF Signal |
|---|---|---|
| Menu (long) | Enter Menu | A, 0 [1] |
| Menu | Scroll up | A |

[1] Second digit = 0...9, *, #, A...D, as an indicator of the type of the system telephone. Using this second digit as an indicator for the type of system telephone gives the PABX the ability to use additional commands for future types of system telephones with extended functionality or display capabilities.

Table 1   (continued)

| Key | Function | DTMF Signal |
|---|---|---|
| C | Go back / delete | B |
| OK | Confirm / select | C |
| ▼ | Scroll down | 0 |
| 1 | 1 | 1 |
| 2 | 2 | 2 |
| 3 | 3 | 3 |
| 4 | 4 | 4 |
| 5 | 5 | 5 |
| 6 | 6 | 6 |
| 7 | 7 | 7 |
| 8 | 8 | 8 |
| 9 | 9 | 9 |
| 0 | 0 | 0 |
| * | * | * |
| # | # | # |

Each transmission of a DTMF signal is answered by the PBAX with a command in form of a frequency shift keying (FSK) signal. Between DTMF transmission and receiving of an FSK command the keypad is blocked. If the DTMF transmission is not answered within the preset system time out, the system telephone will go on hook (and in idle state). In the present embodiment, the system time out is defined to be 3000 ms. However, other system time outs may be chosen. When the hook key of the system telephone is pressed while the system telephone is in the system mode, the system telephone will also go on hook (and in idle state).

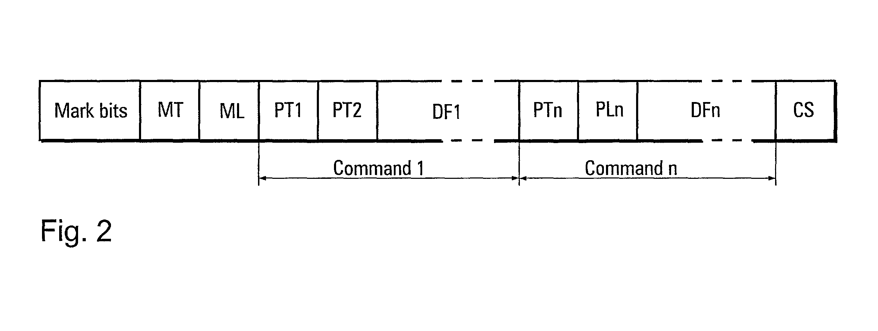

All commands from the PABX to the system telephone are transmitted as message type 0xF1, which is described in ETS 300 659-2 as "reserved for network operator use". The distinction between the different commands is done by using parameter types as described in table 2. This method provides the ability to send several commands in one message. Fig. 2 shows the structure of such a message. The message begins with the mark signal which, according to ETS 300 659-2, comprises a block of 80±25 mark bits. In the present invention, the number of mark bits in the mark signal is reduced to 40 mark bits. By using the reduced number of mark bits the system response time can be reduced.

After the mark bits follows information about the message type (MT), which is always 0xF1, and information about the message length (ML). After that, a number of commands 1 to n follow. Each command comprises information about the parameter type (PTn, where PTn means the parameter type PT of the nth command) (see Table 2), the parameter length (PLn) and a data field of parameter n (DFn). Finally, after the commands a checksum field (CF) follows.

Table 2

| Command | Function | Parameter type (Hex) |
|---|---|---|
| Goto_system_mode | Enter system mode | 0x01 |
| Goto_normal_mode | Enter normal mode | 0x02 |
| Store_redial_number | Store number data in redial memory | 0x03 |
| Line1_display | Display parameter data in first (upper) line | 0x06 |
| Line2_display | Display parameter data in second line | 0x07 |
| Goto_edit_mode | Enter edit mode | 0x08 |

The Commands presented in table 2 are now described in more detail.

Goto_system_mode

The parameter type for the command "Goto_system_mode" is 0x01. The PABX will send the command "Goto_system_mode" at least 80 ms after detection of the DTMF string "A, x" sent from the system telephone (sending the string "A, x" is caused by pressing the menu key of the keypad of the system telephone for more than 300 ms). In the system mode, the system telephone monitors the line for commands and sends DTMF-signals after user actions as described with respect to table 1. The structure of the command "Goto_system_mode" and the contents of the data fields PT, PL and DF are shown in table 3.

Table 3

| Octet number | | Contents |
|---|---|---|
| 1 | PT | 0000 0001 (0x01) Goto_system_mode |
| 2 | PL | 0000 0001 (0x01) Parameter length (1) |
| 3 | OF | 0000 0000 (0x00) Dummy parameter |

Goto_normal_mode

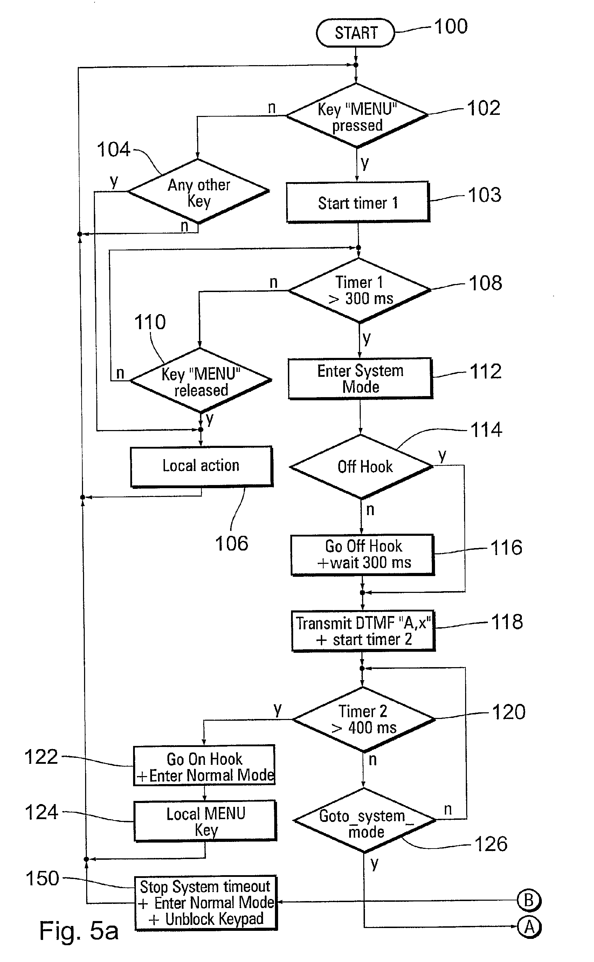

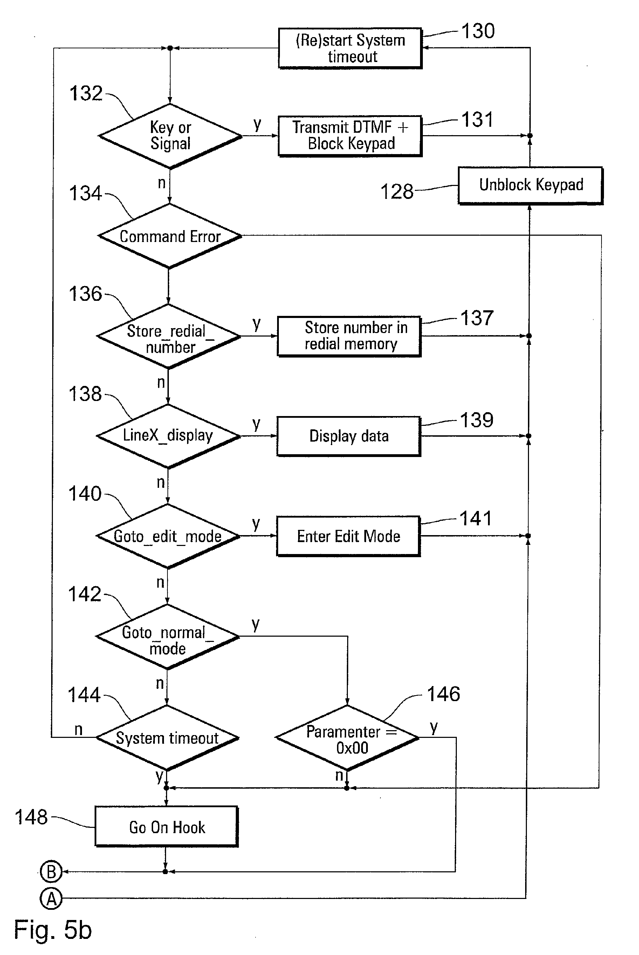

The parameter type for the command "Goto_normal_mode" is 0x02. The PABX will send the command "Goto_normal_mode" when the system mode is left after corresponding user actions (described later with respect to Figs. 5a and 5b). The parameter "hook status" (see table 4) determents whether the system telephone stays of hook or goes on hook after reception of this command. In normal mode, the system telephone acts as if connected to a normal public switched telephone network (PSTN) line. The structure of the command "Goto_normal_mode" is shown in table 4.

Table 4

| Octet number | | Contents |
|---|---|---|
| 1 | PT | 0000 0010 (0x02) Goto_normal_mode |
| 2 | PL | 0000 0001 (0x01) Parameter length (1) |
| 3 | DF | Hook status<br>0000 0000 (0x00) = Stay off hook<br>1111 1111 (0xFF) = Go on hook |

Store_redial_number

The parameter type for the command "Store_redial_number" is 0x03. The PABX will send the command "Store_redial_number" to transfer a telephone number from the telephone book of the PABX into the redial memory of the system telephone. Table 5 shows the structure of the command "Store_redial_number".

Table 5

| Octet number | | Contents |
|---|---|---|
| 1 | PT | 0000 0011 (0x03) Store redial number |
| 2 | PL | 000X XXXX (0xXX) Parameter length (max. 24) |
| 3 | DF | Digit 1 |
| ... | | ... |
| n+2 | | Digit n |

Line1_display

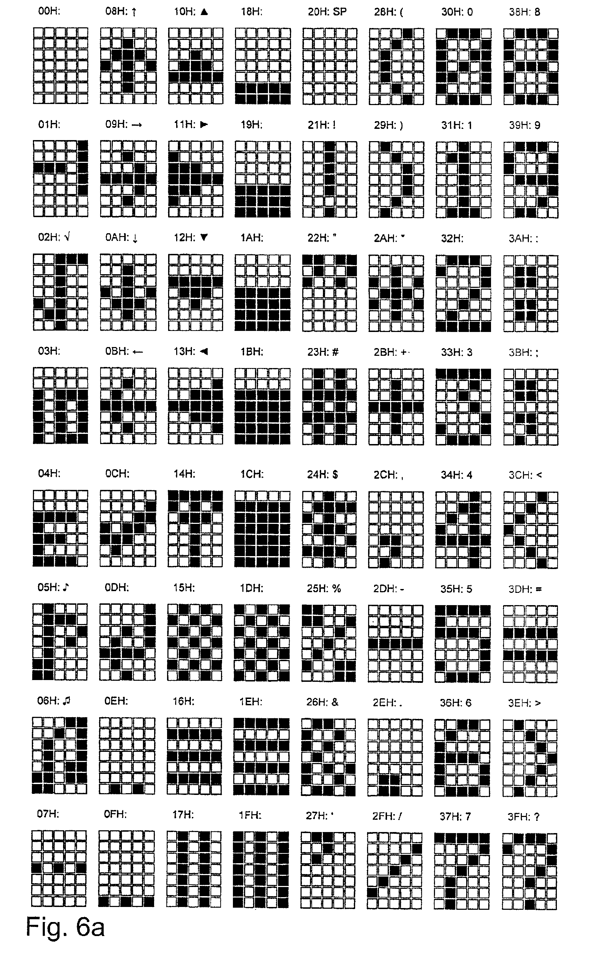

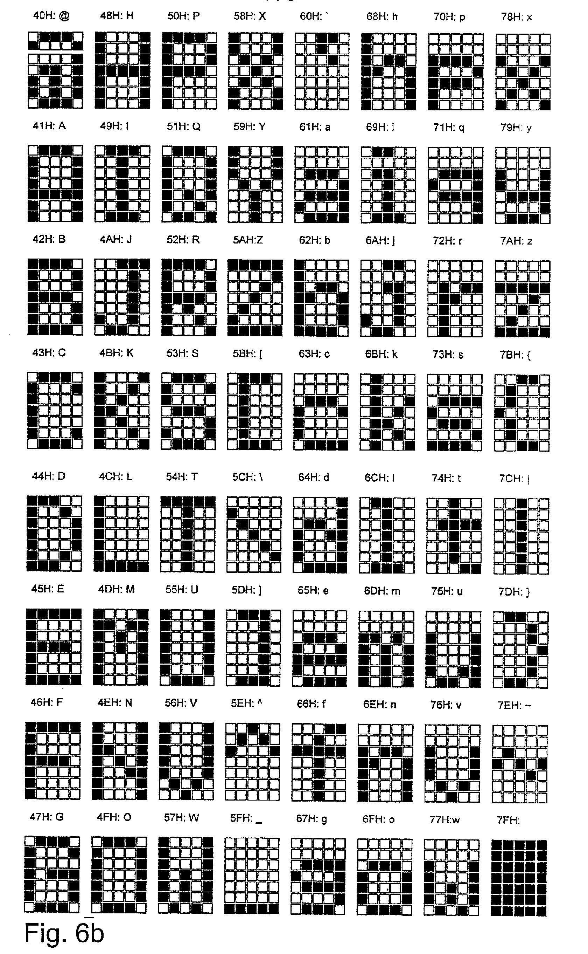

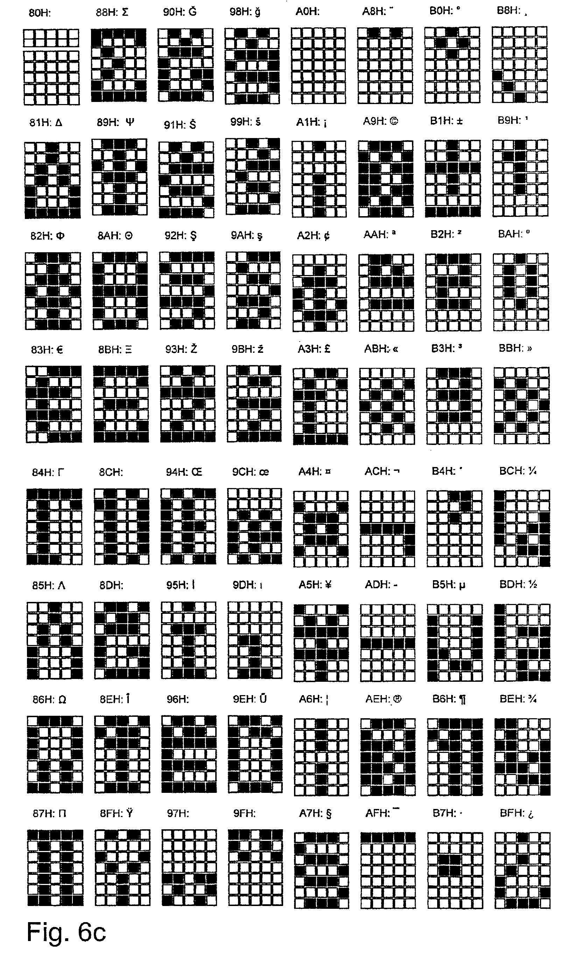

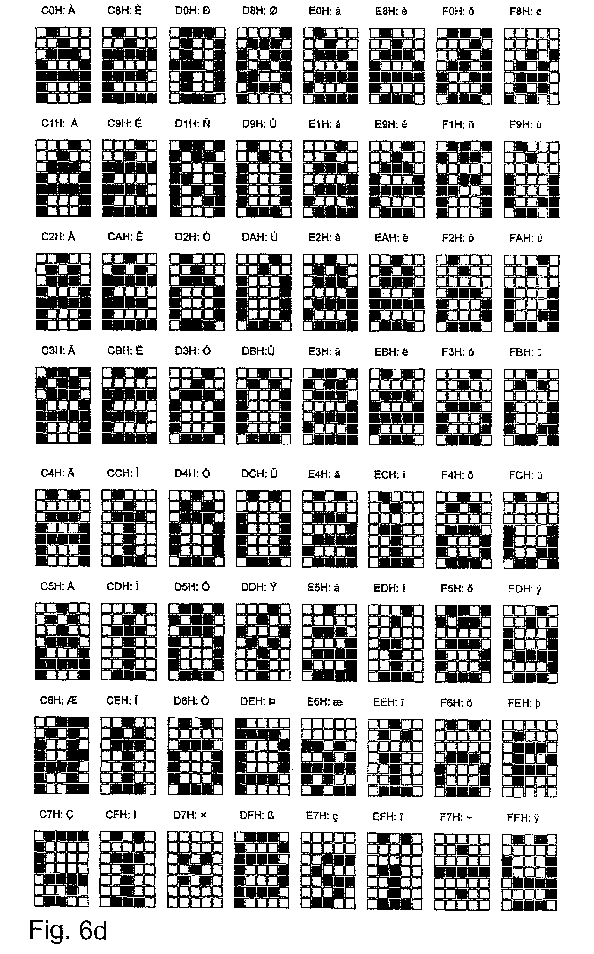

The parameter type for the command "Line1_display" is 0x06. The PABX will send the command "Line1_display" to transfer display data to the first (upper) line of the display. If the length of the parameter field exceeds the total number of characters per line, only the first characters are shown. The structure of the command "Line1_display" is shown in table 6. The used character coding is described in Fig. 6a-6d.

Table 6

| Octet number | | Contents |
|---|---|---|
| 1 | PT | 0000 0110 (0x06) Line1_display |
| 2 | PL | XXXX XXXX (0xXX) Parameter length |
| 3 | DF | Character 1 |
| ... | | ... |
| n+2 | | Character n |

Line2_display

The parameter type for the command "Line2_display is 0x07. The private access branch exchange will send the command "Line2_display" to transfer display data to the second line of the display. If the length of the parameter field exceeds the total number of characters per line, only the first characters are shown. Again, the character coding is shown in Fig. 6a-6d. The structure of the command "Line2_display" is described in table 7.

Table 7

| Octet number | | Contents |
|---|---|---|
| 1 | PT | 0000 0111 (0x07) Line2_display |
| 2 | PL | - XXXX XXXX (0xXX) Parameter length |
| 3 | DF | - Character I |
| ... | | ... |
| n+2 | | Character n |

In the present embodiment, the display 3 has two lines. However, display having only one line may be used. In this case the "Line1_display" command alone is sufficient. On the other hand, displays having more than two lines may also be used. With the commands "Line1_display" and "Line2_display" only the first two lines of displays having more than two lines are accessible. However, further commands "LineX_display" (X representing the xth line) may be added to the command set of the PBAX in order to access further display lines. Detection of these extended display capabilities is done by evaluating the second DTMF digit in the DTMF signal transmitted by the system telephone after pressing the menu key for a certain extended time.

Goto_edit_mode

The parameter type for the command "Goto_edit_mode" is 0x08. The PABX will send the command "Goto_edit_mode" when an alpha input from the user is expected. The structure of the command "Goto_edit_mode" is shown in table 8.

Table 8

| Octet number | | Contents |
|---|---|---|
| 1 | PT | 0000 1000 (0x08) Goto_alpha edit_mode |
| 2 | PL | 0000 0001 (0x01) Parameter length (1) |
| 3 | DF | 0000 0000 (0x00) Dummy Parameter |

Typically, the command "Goto_edit_mode" will be send following a display command. In the "edit mode", the system telephone starts or restarts a "Next_character_timer" after each key entry. The "Next_character_timer" is in the present embodiment for example defined to be 1600 ms. When this timer runs out, the systems telephone sends the key "#" to the PABX which will answer with a new display message (with the cursor advanced to the next position). The #-key is blocked by the system telephone (is not available for the user) in the edit mode. The system telephone stays in the edit mode until another mode is set by an appropriate command, or a system time out has been exceeded.

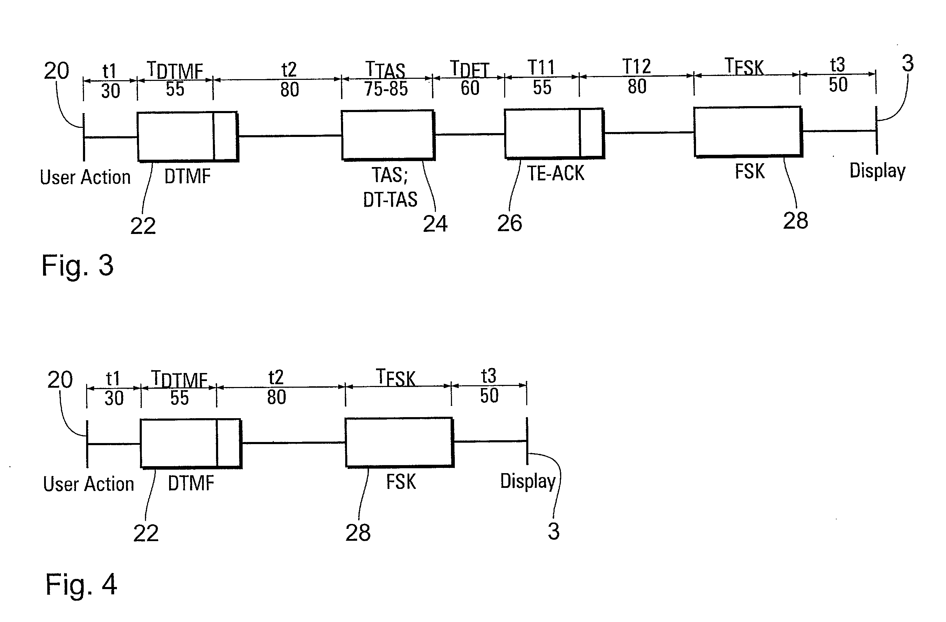

To reduce the response time in bi-directional data transmission between the PABX and the system telephone an optimised timing is used. First, however, the usual timing is described with respect to Fig. 3.

30 ms (t1) after a user action 20 a DTMF signal 22 is transmitted from the system telephone to the PABX. This DTMF signal 22 is detected by the PABX at least after 55ms ($T_{DTMF}$). 80ms after detection of DTMF signal 22 the PABX sends a TAS signal 24 having a length between 75 and 85 ms ($T_{TAS}$) to the system telephone. Within further 160±5 ms, the PABX must receive a TE-acknowledgement signal 26 (TE-ACK) from the system telephone, i.e. the PABX must detect and recognize a TE-ACK signal 26 sent from the system telephone. The recognition of the TE-ACK signal 26 by the PABX takes 40 to 55 ms (T11). In case the PABX receives the TE-ACK signal 26, it sends the FSK signal 28 within 55-200 ms (T12) after the recognition of the TE-ACK signal. After further 50 ms, (t3) the data contained in the FSK signal 28 will be displayed on the display 3 of the system telephone.

Assuming the best case timing, a duration of $T_{TAS}$ = 75 ms, a detection time for the TAS of about $T_{DET}$ = 60 ms, a recognition time of T11 = 55 ms and a time between the recognition of the TE-ACK signal 26 and the start of the FSK signal 28 T12 = 80 ms, there will be at least an overhead for each FSK command of:

$$t1 + T_{DTMF} + t2 + T_{TAS} + T_{DET} + T11 + T12 + t3 = 30 + 55 + 80 + 75 + 60 + 55 + 80 + 50ms = 485ms.$$

Next, the optimised timing will be described with respect to Fig. 4. The optimised timing is achieved by eliminating the TAS-signal and the TE-ACK signal. According to Fig. 4, 30 ms after a user action 20, a DTMF signal 22 is send from the system telephone to the PBAX. This DTMF signal 22 is detected by the PABX at least after 55ms ($T_{DTMF}$). 80 ms after the detection of the DTMF signal 22, the PBAX answers directly with the FSK signal 28 instead of sending the TAS signal and waiting for the TE-ACK signal. The data of the FSK signal 28 is displayed on the display 3 of the system telephone 50 ms (t3) after the FSK signal 28 has been received by the system telephone. To allow for the optimised timing, the communication unit 7 of the communication control unit 11 of the system telephone is implemented such that it is able to detect FSK signals in off hook state without leading TAS signals. With this method, the overhead for each FSK command can be reduced to:

$$t1 + T_{DTMF} + t2 + t3 = 30 + 55 + 80 + 50 = 215 \text{ ms.}$$

In addition to optimising the timing, the system response time can be further reduced by reducing the number of mark bits in front of a message below the minimum of 80 - 25 = 55 bits as specified in ETS 300 659-2. In the present embodiment 40 mark bits are used.

A typical command "LineX_display" containing 16 characters in the message field (see for example table 6 or 7) will, according to the above optimised timing scheme and the reduced number of mark bits, have the following duration: 40 mark bits +1 byte message type +1 byte message length +1 byte parameter type +1 byte parameter length +16 bytes data +1 byte checksum = 40 + 10 + 10 + 10 + 10 + 160 + 10 = 250 bits at a transmission rate of 1200 Bd = 208 ms. Using normal timing scheme, there will be a delay from a user action to the corresponding display update of: overhead (see Fig. 3 and related the description) plus $T_{FSK}$ which leads to 485 + 220 = 705 ms. In contrast thereto, using the optimised timing scheme, there will be a delay from a user action to the corresponding display update of: overhead (see Fig. 4 and related the description) plus $T_{FSK}$ which leads to 215 + 208 = 423 ms.

The method according to the invention is implemented as a stimulus protocol i.e. it does not control the call procedures, but rather transfers information. The use of a stimulus protocol gives the best flexibility for implementing future features.

With respect to Figs. 5a and 5b, which represent a flowchart of system telephone function, the operation of the communication control unit 11 will be described.

When, after the communication control unit 11 of the system telephone has been started in step 100, the menu key is pressed in step 102, the communication control unit 11 of the system telephone starts a first timer, step 103. If any other key is pressed, step 104, instead of the menu key, the communication control unit interprets it as a local action of the system telephone and returns to the state it was in after it was started, in the following called "after start state", (step 106). In case no key is pressed, the communication control unit 11 remains in the after start state. With the communication control unit 11 in the after start state, the system telephone acts as usual PSTN telephone.

After starting the first timer in step 103, the communication control unit 11 checks whether the menu key has been released within the next 300 ms, step 110. If the key has been released with in that time, the communication control unit 11 interprets the pressing of the menu key as local action, step 106, and returns to the after start state.

If, on the other hand, the communication control unit 11 detects in step 108 that the menu key is pressed for more than 300 ms, it causes the system telephone to enter the system mode, step 112, and checks in step 114, whether the state of the telephone is off hook. If not, the communication control unit causes the system telephone to go off hook and waits for 300 ms, step 116. After the 300 ms have passed, the communication control unit 11 causes the communication unit 7 to transmit the DTMF signal "A, x" and starts a timer 2 in step 118. If, in step 114, it is detected that the system telephone is already off hook, step 116 is skipped and the communication control unit 11 advances directly to step 118.

After transmitting the DTMF signal, the communication control unit 11 checks whether the timer 2 has exceeded 400 ms in step 120. If this is the case and no "Goto_system_mode" command has been received from the PABX, the communication control unit 11 causes the system telephone to go on hook and to enter the normal mode in step 122. In step 124, the communication control unit 11 interprets the pressing of the menu key as local menu key action, step 124, and returns to the after start state.

If the system telephone receives the "Goto_system_mode" command from the PABX before the 400 ms have exceeded (steps 120 and 126), the communication control unit 11 unblocks the keypad of the input unit 5 of the system telephone if it was blocked, step 128, so that user actions related to commands or data from the PABX can be performed.

In step 130, a system time out, after which the system telephone goes on hook if no key is pressed and no signal received from the PABX, is started. In step 132, the communication control unit 11 checks whether a key is pressed or a signal generated. If yes, the communication control unit 11 causes the communication unit 7 to transmit the corresponding DTMF signal to the PABX and blocks the keypad, step 131. The communication control unit 11 then returns to step 116 and restarts the system time out.

Then again, in step 132, it is checked whether a key has been pressed. As in step 131 the keypad has been blocked the answer must be no this time so that the communication control unit 11 proceeds to step 134 where it checks whether or not a command error has occurred. If yes, the communication control unit 11 causes the system telephone to go on hook in step 148, stops the system time out, causes the system telephone to enter the normal mode, unblocks the keypad in step 150, and returns to after start state.

If, in step 134, no command error has been detected the communication control unit 11 checks in step 136 whether a "Store_redial_number" command has been received from the PABX. In case of yes, the number is stored in the redial memory in step 137. The communication control unit 11 then returns to step 128 in which the keypad is unblocked again.

If no "Store_redial_number" command has been received, the communication control unit 11 proceeds to step 138 in which it checks whether a "LineX_display" command has been received from the PABX. In case of yes the communication control unit 11 causes the data to be displayed on the display 3, step 139. Then, the communication control unit 11 returns to step 128, in which the keypad is unblocked.

In case no "LineX_display" command has been received, the communication control unit 11 checks in step 140 whether a "Goto_edit_mode" command has been received from the PABX. In case of yes, the communication control unit 11 enters the edit mode, step 141, and returns then to step 128, in which the keypad is unblocked.

If no "Goto_edit_mode" command has been received, the communication control unit 11 checks in step 142 whether a "Goto_normal_mode" command has been received from the PABX. In case of yes, the communication control unit 11 checks in step 146 whether the data field DF of the command contains the parameter 0x00, which determines whether the system telephone stays off hook or goes on hook (see Tab. 4). In case of no (which means that the system telephone shall go on hook) the communication control unit 11 causes the system telephone to go on hook in step of 148 and then stops the system time out, enters the normal mode, unblocks the keypad in step 150 and returns to after start state. With this procedure the system telephone goes on hook, if the system mode is left. If in step 146 the parameter is found to be 0x00 (which means that system telephone shall stay off hook) the communication control unit 11 proceeds directly to step 150. With this procedure the system telephone stays off hook, if the system mode is left. In the system mode, the system telephone is usually off hook.

If, in step 142, no "Goto_normal_mode" command has been received from the PBAX, it is checked in step 144 whether the system time out is reached or not. If the system time out is not reached the system telephone returns to step 132. If the system time out is reached the communication control unit 11 causes the system telephone to go on hook in step 148 and proceeds further to step 150.

To perform the system telephone function described with respect to Fig. 5, the system telephone must be able to detect a FSK signal without a leading TAS signal once the system mode is entered (step 112 in Fig. 5). The system telephone may also be able to detect an FSK signal without leading TAS signal in the normal mode. However, in the normal mode the system telephone should also be able to communicate using TAS and TE-ACK signals. This assures that the analogue system telephone can be used with a usual PSTN line.

For performing the inventive method the PABX comprises a function control, which is, at least in a special mode, able to relate DTMF signals from the system telephone representing user actions to a function of the PABX'. Further, the function control unit of the PABX must be able to send commands to the system telephone as FSK signals, in particular without sending a TE-TAS signal and waiting for a TE-ACK signal from the telephone before sending the FSK command.

**Claims**

1. Method for accessing functions of a private access branch exchange equipment through a system telephone, in which signals are transmitted from the private access branch exchange equipment to the system telephone as FSK signals and from the system telephone to the private access branch exchange equipment as DTMF signals **characterized in that** the private access branch exchange equipment uses FSK signals to transmit commands to the system telephone while the system telephone uses DTMF signals to transmit user actions to the private access branch exchange.

2. Method as defined in claim 1, in which the private access branch exchange answers to a DTMF signal of the system telephone directly with an FSK signal.

3. Method as defined in claim 2, wherein the system telephone goes on hook if a DTMF signal is not answered with a command by the private access branch exchange equipment within a predetermined time out.

4. Method as defined in claim 3, wherein the time out is at least one order of magnitude longer than the usual time between the reception of the DTMF signal by the private access branch exchange equipment and the sending of the FSK signal.

5. Method as defined in any of the preceding claims, wherein several commands are transmitted within one message by using only one message type and different parameter types.

6. Method as defined in any of the preceding claims, wherein less than 80 mark bits are used.

7. Method as defined in claim 6, wherein 40 mark bits are used.

8. System telephone for connecting to a private access branch exchange equipment by a two wire connection (9) comprising an input unit (5), a communication unit (7) being able to send DTMF signals to the private access branch exchange equipment and receiving FSK signals from the private access branch exchange equipment, and a communication control unit (11) **characterized in that** the communication control unit (11) is designed such that it provides a system mode in which FSK signals received from the private access branch exchange equipment are recognized as commands and in which actions of the input unit (5) related to commands of the private access branch exchange equipment are transmitted to the private access branch exchange equipment as DTMF signals..

9. System telephone as defined in claim 8, in which the communication control unit (11) is designed such that it detects an FSK signal without a leading TE alerting signal in off hook state.

10. System telephone as defined in claim 8 or 9, wherein the communication unit (11) is designed such that, after sending a DTMF signal, an action of the input unit (5) is only accepted after an FSK signal from the private access branch exchange equipment has been received.

11. System telephone as defined in any of the claims 8 to 10, wherein the communication control unit (11) is designed such that a special action of the input unit (5) is defined for initiating the system mode, and the system mode is entered if this action is performed and a corresponding command from the private access branch exchange equipment is received by the communication control unit (11) within a preset time.

12. Private access branch exchange equipment for connecting to a system telephone by a two-wire connection comprising a function control unit which is designed such that it provides a mode, in which it relates DTMF signals from the system telephone representing user actions related to a function of the private access branch exchange equipment to the respective function, and in which it is possible to send commands to the system telephone as FSK signals.

Fig. 1

| Mark bits | MT | ML | PT1 | PT2 | DF1 | ⋯ | PTn | PLn | DFn | ⋯ | CS |
|-----------|----|----|-----|-----|-----|---|-----|-----|-----|---|----|

Command 1        Command n

## Fig. 2

Fig. 3

Fig. 4

EP 1 351 476 A1

Fig. 5a

START — 100

Key "MENU" pressed — 102

Start timer 1 — 103

Any other Key — 104

Timer 1 > 300 ms — 108

Key "MENU" released — 110

Enter System Mode — 112

Local action — 106

Off Hook — 114

Go Off Hook + wait 300 ms — 116

Transmit DTMF "A,x" + start timer 2 — 118

Timer 2 > 400 ms — 120

Go On Hook + Enter Normal Mode — 122

Local MENU Key — 124

Goto_system_mode — 126

Stop System timeout + Enter Normal Mode + Unblock Keypad — 150

B

A

Fig. 5b

Fig. 6a

EP 1 351 476 A1

40H: @ 48H: H 50H: P 58H: X 60H: ` 68H: h 70H: p 78H: x

41H: A 49H: I 51H: Q 59H: Y 61H: a 69H: i 71H: q 79H: y

42H: B 4AH: J 52H: R 5AH:Z 62H: b 6AH: j 72H: r 7AH: z

43H: C 4BH: K 53H: S 5BH: [ 63H: c 6BH: k 73H: s 7BH: {

44H: D 4CH: L 54H: T 5CH: \ 64H: d 6CH: l 74H: t 7CH: |

45H: E 4DH: M 55H: U 5DH: ] 65H: e 6DH: m 75H: u 7DH: }

46H: F 4EH: N 56H: V 5EH: ^ 66H: f 6EH: n 76H: v 7EH: ~

47H: G 4FH: O 57H: W 5FH: _ 67H: g 6FH: o 77H:w 7FH:

Fig. 6b

17

| 80H: | 88H: Σ | 90H: Ğ | 98H: ğ | A0H: | A8H: ¨ | B0H: ° | B8H: ¸ |

| 81H: Δ | 89H: Ψ | 91H: Š | 99H: š | A1H: ¡ | A9H: © | B1H: ± | B9H: ¹ |

| 82H: Φ | 8AH: Θ | 92H: Ş | 9AH: ş | A2H: ¢ | AAH: ª | B2H: ² | BAH: º |

| 83H: € | 8BH: Ξ | 93H: Ž | 9BH: ž | A3H: £ | ABH: « | B3H: ³ | BBH: » |

| 84H: Γ | 8CH: | 94H: Œ | 9CH: œ | A4H: ¤ | ACH: ¬ | B4H: ´ | BCH: ¼ |

| 85H: Λ | 8DH: | 95H: İ | 9DH: ı | A5H: ¥ | ADH: - | B5H: µ | BDH: ½ |

| 86H: Ω | 8EH: Î | 96H: | 9EH: Ů | A6H: ¦ | AEH: ® | B6H: ¶ | BEH: ¾ |

| 87H: Π | 8FH: Ÿ | 97H: | 9FH: | A7H: § | AFH: ¯ | B7H: · | BFH: ¿ |

# Fig. 6c

C0H: À    C8H: È    D0H: Ð    D8H: Ø    E0H: à    E8H: è    F0H: ð    F8H: ø

C1H: Á    C9H: É    D1H: Ñ    D9H: Ù    E1H: á    E9H: é    F1H: ñ    F9H: ù

C2H: Â    CAH: Ê    D2H: Ò    DAH: Ú    E2H: â    EAH: ê    F2H: ò    FAH: ú

C3H: Ã    CBH: Ë    D3H: Ó    DBH: Û    E3H: ã    EBH: ë    F3H: ó    FBH: û

C4H: Ä    CCH: Ì    D4H: Ô    DCH: Ü    E4H: ä    ECH: ì    F4H: ô    FCH: ü

C5H: Å    CDH: Í    D5H: Õ    DDH: Ý    E5H: å    EDH: í    F5H: õ    FDH: ý

C6H: Æ    CEH: Î    D6H: Ö    DEH: Þ    E6H: æ    EEH: î    F6H: ö    FEH: þ

C7H: Ç    CFH: Ï    D7H: ×    DFH: ß    E7H: ç    EFH: ï    F7H: ÷    FFH: ÿ

Fig. 6d

**European Patent Office**

## EUROPEAN SEARCH REPORT

Application Number

EP 02 09 0134

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/003538 A1 (SAKATA TOSHIHIKO) 14 June 2001 (2001-06-14) * page 1, paragraphs 1,6,7,10,11,14,15 * * page 2, paragraphs 26,27,30,31,33-39 * * page 3, paragraphs 50,51,54 * | 1,8,12 | H04M3/42 H04M1/57 |
| Y | | 6,7 | |
| A | | 2-5,9-11 | |
| | --- | | |
| X | DE 101 10 972 A (SIEMENS AG) 22 November 2001 (2001-11-22) * column 1, paragraphs 2,5 * * column 2, paragraphs 8,10 * * column 3, paragraph 25 * * column 4, paragraph 29 * * column 5, paragraph 36 * * column 6, paragraphs 39-42 * * column 7, paragraph 47 * * column 8, paragraph 56 * * figures 3,8 * | 1,8 | |
| A | | 2-7,9-12 | |
| | --- | | TECHNICAL FIELDS SEARCHED (Int.Cl.7) |
| Y | EUROPEAN TELECOMMUNICATIONS STANDARDS INSTITUTE (ETSI): "Public Switched Telephone Network (PSTN); Subscriber line Protocol over the local loop for display (and related) services; Part 2: Off-hook data transmission" EUROPEAN TELECOMMUNICATION STANDARD, September 1997 (1997-09), XP002207632 * page 7 - page 8 * * figures 1,2 * | 6,7 | H04M |
| A | | 1-5,8-12 | |
| | --- | | |
| | -/-- | | |

The present search report has been drawn up for all claims

| Place of search | Date of completion of the search | Examiner |
|---|---|---|
| MUNICH | 31 July 2002 | Agante da Silva, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 263 084 A (CHAPUT GUY J ET AL) 16 November 1993 (1993-11-16) * column 1, line 6-9 * * column 1, line 47-53 * * column 3, line 45-51 * * column 4, line 33-67 * * column 5, line 3-19 * * figure 1 * | 1-12 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 31 July 2002 | Agante da Silva, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 09 0134

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2002

| Patent document cited in search report | | Publication date | Patent family member(s) | | Publication date |
|---|---|---|---|---|---|
| US 2001003538 | A1 | 14-06-2001 | JP<br>DE<br>GB | 2001156905 A<br>10059189 A1<br>2363030 A | 08-06-2001<br>07-06-2001<br>05-12-2001 |
| DE 10110972 | A | 22-11-2001 | DE | 10110972 A1 | 22-11-2001 |
| US 5263084 | A | 16-11-1993 | CA<br>GB<br>HK<br>JP<br>JP | 2068633 A1<br>2258119 A ,B<br>181696 A<br>2992787 B2<br>5199304 A | 23-01-1993<br>27-01-1993<br>11-10-1996<br>20-12-1999<br>06-08-1993 |

EPO FORM P0459

For more details about this annex : see Official Journal of the European Patent Office, No. 12/82